# EUROPEAN PATENT APPLICATION

(11) **EP 1 320 250 A1**
(43) Date of publication of application: **18.06.2003**
(21) Application number: 01129325.5
(22) Date of filing: 14.12.2001
(51) Int. Cl.: H04N 1/00

(54) **Mobile phone image processing**

(71) Applicant: GRETAG IMAGING Trading AG, 5430 Wettingen (CH)
(72) Inventor: Näf, Markus, 8032 Zürich (CH); Nussbaumer, Marc, 8008 Zürich (CH)
(74) Representative: Schwabe - Sandmair - Marx

(57) **Abstract**

The present invention relates to a method for generating a print-out or a photograph on the basis of image data transferred by a mobile station (10), for instance a mobile phone, a cellular phone or the like, according to which an image recording unit of the mobile station (10) captures an image which is digitalised and stored in a memory unit of the mobile station; the image data are then sent to an image data processing station (20; 20a, 20b, 22, 24, 26), and in this station the image data are processed to produce a print-out of the processed image data.

## Description

The present invention relates to a method for generating a print-out on the basis of image data transferred by a mobile station, for instance a mobile phone or a cellular phone, according to claim 1. Furthermore, the present invention relates to a system for generating a print-out on the basis of image data transferred by a mobile station, for instance a mobile phone or a cellular phone, in accordance with claim 10.

It is known that mobile phones or cellular phones are increasingly provided with digital image recording devices. The images captured by these image recording devices currently moment have a very pure resolution, which amounts to about 300 x 250 pixels. Such images can be transmitted to a receiving mobile station so that at the receiving mobile station, or for instance a computer, the digital image data transmitted in a multimedia format can be displayed on an LCD screen or the like (LCD = liquid crystal device).

Known mobile stations are able to capture and store up to 20 or 30 images in a memory section. It is possible to send one or several of these images if the mobile station is MMS-enabled, which means that the mobile station, e.g. a mobile phone, is able to take a photograph by means of a digital image capturing device and to store and transmit the digital data to a remote receiving/transmitting station of a mobile network provider.

In the future, the network service provider will provide 2Mbit services, which means that the data transmitting rate will be raised to 2 Mbit per second which will enable the mobile phone manufacturers to assemble new types of mobile phones which will be able to take photos, providing an enormously enlarged resolution, to store the digital image data of these photographs and to transmit the image data at a highly increased transmission rate.

It is an object of the present invention to provide a method and a system which are able to provide photographs and/or print-outs on the basis of image data transferred by a mobile station, said photographs or print-outs being provided by photo finishing laboratories and/or digital print services.

It is another object of the present invention to generate acceptable photographs and/or print-outs on the basis of low resolution digital image data.

These and further objects are solved by the subject matter of the independent claims. Advantageous embodiments of the independent claims are defined in the sub-claims.

The advantages of the present invention are based on a method according to which an image recording unit of a mobile station captures an image which is digitalised and stored in a memory unit of a mobile station. This digital image data is send to an image data processing station, and in the image data processing station the image data are processed into a print-out, e.g. a photograph or the like, of the processed digital image data.

In terms of the present invention the term mobile station with a camera means is not only represented by a mobile station incorporation a digital camera, but also a mobile station to which a digital camera can be connected or which can communicate with a digital camera e.g. via an infrared connection interface. However, if a usual digital camera is used to capture the images, it is very time-consuming to transmit the high resolution digital image data and thus large transmission time devalues the practicability of the invention.

According to another aspect of the invention, a mobile station having an image recording unit and an image data memory for storing the data of captured images is able to send the digital image data to a mobile network provider station. This station receives the digital data including image data from a mobile station, and sends the received digital data to a photo service server station which receives the multimedia data from the mobile station via the mobile network provider station, and the photo service server station transforms the multimedia data into print orders to be transmitted and processed by a digital printer device. For instance a mobile station can incorporate digital image data into a multimedia format frame, e.g. a synchronisation language, for instance SMIL, and the photo service server station has to extract the image data and if necessary further relevant data (e.g. user ID, ...) out of the multimedia data and to reassemble the data to configure print jobs for the relevant digital printing devices.

According to the invention, it is proposed to install a photo service server which receives multimedia data, i.e. for instance digital image data, additional text data strings, order data strings and the like, and transforms these multimedia format data into order data which can be processed by a digital printer device.

Either the photo service server or the digital printer device can process the digital image data, generated from multimedia data to create photo finishing image data, to produce acceptable photographs and/or print-outs on the basis of low resolution digital image data. To increase the quality of a low resolution image data, any of the known image processing methods can be used on their own or in combination.

For instance, it is possible to increase the image data sharpness by varying the image sharpness, the brightness and the colour content of the digital image data. In this connection, reference is made to the following European patent applications having the application numbers 01 102 803.2, 01 104 591.1, 01 107 802.9 and 01 108 591.7, which have all been filed by the applicant of this patent application, and whose content is incorporated in the disclosure of the present patent application by reference. Since the image data captured by the camera have to be enlarged to present a print-out with an acceptable seize, a high quality interpolation process should be used to process the digital image data. Furthermore, since the variety of the colours of the digital camera embedded in the mobile station is very low, it is necessary to increase the colour palette or colour range e.g. by means of a dithering process.

Regarding the abbreviations used in the application and regarding the mobile network it is referred to the textbook GPRS and 3G "Wireless Application" by Christoffer Andersson, ISBN 0471-41405-0, the disclosure of which is incorporated in this application by reference.

It is an important feature that the digital image data, transmitted to the mobile network provider station and sent to the image data processing station, are first sent to a photo service server station. The photo service server station receives the multimedia data from the mobile network provider station and transforms the received multimedia data into customer-related photo finishing order data. This can be done on the basis of a variety of different methods and steps. However, in most of the cases it is necessary to provide data to identify the customer which sent the image processing order. These identification data can for instance be the phone number of the mobile station of the respective customer. On the other hand, it is also possible that the customer identifying data is an information data string added to the multimedia data sent from the mobile station to the mobile network provider station, including information about the name and the address of a customer, about the credit card number of the customer, about an account identification number or the like. It is possible to store such data in the mobile station of the customer and to always send these data automatically, together with the order, to the photo service server station via the mobile network provider station. On the other hand, it is also possible to charge the phone number and thus to add the amount to be paid for completing the photo finishing order to the mobile phone bill, or to charge the customer when he comes to the photo shop to pick up the envelope with his photographs. Of course, the customer is able to send an order including only one photograph or several photographs.

Accordingly, the customer can take a photograph with a mobile phone, a cellular phone, an IEEE 802.11 wireless phone for small mobile networks or the like and immediately order this photograph as a print-out to be sent to his home address, or he can pick up the photograph at a photo shop.

Accordingly, the customer takes a picture by means of an MMS-enabled mobile station or mobile phone, said mobile station creating an MMS message which includes image data, and sends this MMS message to a special e-mail address, for instance the e-mail address of the applicant. On the other hand, it is also possible to use a special service number. If the customer wishes the finished photographs to be sent to his home address, he can avoid adding further information. On the other hand, if the customer wishes the finished photographs to be sent to another address, the customer can add one or more recipient addresses.

At the mobile network provider server, i.e. e.g. the MMS Center (MMC) the MMS message can be transformed into an e-mail with the digital image data as an attachment. It is possible to add information to this e-mail, for instance with respect to the location of the receiving station of the mobile network provider, a mobile subscriber address, a session ID, a pick-up address for the customer to pick up the finished photographs, and/or the like.

The connection between the equipment of the mobile network provider and the equipment of the photo finisher can also be realised through the internet, whether the connection is wireless or through a connection line. It is clear that the data transfer can be conducted through the WAP technology or also through an MMS Center of the network provider. The invention is not limited to a particular kind of communication technology.

The photo service server station receives the e-mail with the digital image data as an attachment, and the additional information, and transforms these data into a format of the print order. The photo service server station either sends the print order data directly to a digital image printer or initially to a server to increase the quality of the final print-out irrespective of the fact that the digital image data have a poor quality and a poor resolution.

In the meantime, after the photo service server station has received the order data and before the order data are processed to create the ordered photographs, the photo service server station sends a message, for instance an SMS, with billing information, e.g. the MSISDN and the amount to be charged to the mobile network provider station so that the customer's account can be charged. The mobile network provider station can send a message to the photo service server station that the billing transaction has been completed, and the photo service server station sends a message, e.g. an e-mail or the like, to the mobile station of a customer to confirm that the order has been received, has been charged and will be completed. Furthermore, the photo service server station sends a session ID to the customer, and on the basis of this session ID the customer will be able to claim the order at a photo shop, and especially at a particular photo shop which should be in the vicinity of the home address of the customer or of the address of the recipient. On the other hand, it is also possible to send the ordered photographs directly to the home address of the customer or to the address of a recipient.

Accordingly, it is also possible to charge pre-paid cards using the above-disclosed means accordingly.

Finally, a digital printer receives the order format data including the digital image data from the photo service server station and prints the image data. Of course, these digital image data can be processed beforehand to provide high quality photographs or print-outs even on the basis of low quality digital image data.

The network provider can send additional information to the photofinishing equipment with respect to the location of the customer, i.e. his mobile station, since the network provider knows, which receiving station of his wide spread network of receiving stations remind the customer order. In accordance with this information it is possible to send the completed order to a photo-shop at the identified location and to inform the customer about the address of this photo-shop.

The finished photographs or print-outs are sent to a particular photo shop to be claimed and picked up by the customer or are sent directly by post to the home address of the customer.

Of course, the customer can add information to his original MMS message with respect to the print paper which is to be used for the ordered photographs, with respect to a particular format, for instance a postcard format, or with respect to text messages which are to be added to the photographs and/or print-outs, for instance to create greeting-cards or the like.

In this connection, it has to be noted that the customer image data can be combined with black-white and/or colour image data to incorporate templates (e.g. for Christmas cards, greeting cards) to be printed out or displayed together with the customer-specific data.

It has to be kept in mind that the photo service server station can be a computer-based entity which is programmed to transform and/or to recognise multimedia messages containing digital image data, and in particular MMS data fields into print orders in particular for digital printers. Therefore, this photo serve server station can also be incorporated into the equipment of the mobile network provider, so that the mobile network provider also provides the service to alter the format of the multimedia messages with digital image data to accord with the format of print orders to be realised on a digital photo printer. To store the image data temporarily, it is possible to store test data either in the equipment of the network provider or in the equipment of the photofinisher. It is also possible to incorporate a long term storage means at the side of the photofinisher to store digital image data of many customers so that these image data can be accessed on request. For instance, if the customer has received a customer-specific access code, he can access his order or several of his orders so that he can suspect, e.g. the processed images of his orders via his mobile station, a screen at a PhotoShop or wherever, before the print-outs are produced.

In the following, the present invention will be explained on the basis of preferred embodiments, disclosing further features, objects and advantages which are deemed to be characteristic of the present invention. When explaining these embodiments, reference is made to the accompanying drawings, in which:
- Fig. 1: represents a schematic flow diagram of a basic system according to the invention which is able to realise the method of the invention; and
- Fig 2: is a flow diagram of a more detailed system according to the invention.

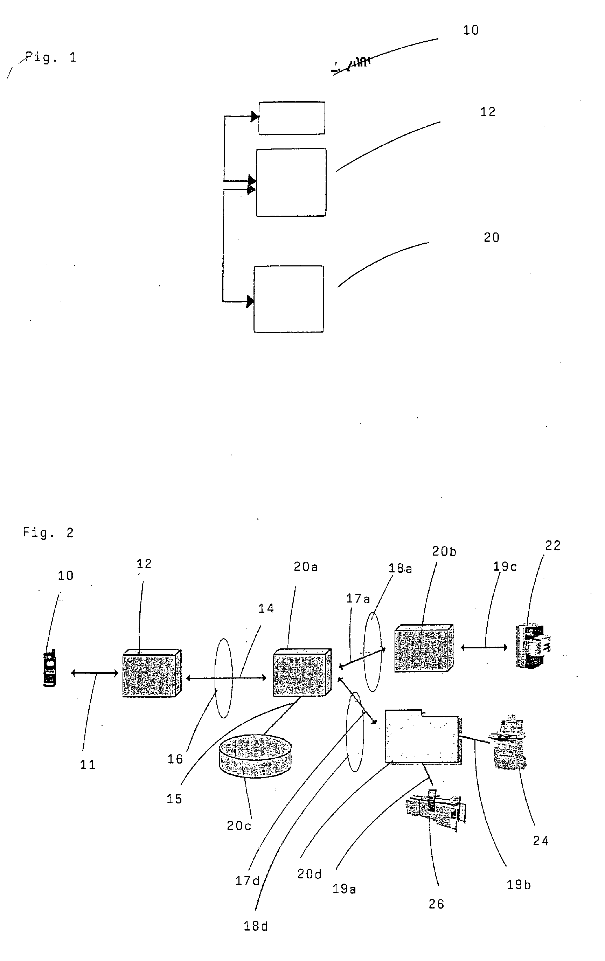

In Fig. 1, a very simple embodiment of the system according to the present invention is shown. A mobile station 10 comprises a digital camera as well as a memory to store digital image data captured by the digital camera of the mobile station, e.g. a mobile phone 10.

The mobile station 10 or cellular phone communicates with a mobile network provider station 12 which connects the mobile station 10 to any other remote stations according to the wishes of the user of the mobile station or the customer who owns the respective mobile station. In the present case, a station 20 to be connected to the mobile network provider station 12 can be an image data processing station which receives the image data, in particular as multimedia data, from the mobile network provider station. The image data processing station transforms the received multimedia data into order-related digital image data and customer-related data. The image data can be processed in order to be enhanced with respect to the final image quality, and the customer-related data can be used to handle all business-related actions like charging the customer's account, assigning the order to the respective customer and assigning the finally printed photographs or print-outs to the respective customer.

In accordance with a more sophisticated embodiment which is deemed to be in accordance with the present invention, Fig. 2 shows a detailed diagram illustrating the communication from the mobile station, e.g. a mobile phone 10, to the digital laboratory, which can be a digital print-out station 22, which can be activated on the direct request of the user himself, to a digital minilab 24 which is able to print out photographs at a medium speed, or to a digital large scale printer 26 which is able to print out thousands of photographs per hour.

The mobile station 10 comprises a digital camera and an image memory. The mobile station 10 is able to create MMS messages comprising digital image data of captured pictures.

The mobile station is operated within the multimedia message service environment (MMSE) of the mobile network provider. On the other hand, the MMC which represents by on the station 12 provides an interface to other parties through SMTP. In terms of the present invention, the other parties have to be identified in a photo service server station 20a which communicates with the mobile network operator station 12 on the basis of the SMTP interface 16 through either a wireless channel 14 or through a high-speed data connection line 14.

The photo service server station 20a receives a multimedia data configuration from the mobile station 10 via the mobile network provider station or MMC 12. The multimedia data are transformed into another data structure. This data structure conforms to an image data structure and a customer-related data structure which can be processed in a small scale photo lab as well as in a large scale photo lab. The station 20a has access to a transaction database 20c which provides processing data to support any transformation processing. In addition, it is also preferred that the transaction data base also stores data regarding the settlement of each specific customer order, the account transaction and so on, to be able to recall data if, e.g., the customer should have complaints, the billing procedure went wrong or the like. Additionally, the sum of the parts 20a, 20c also provides for enough storage space to store the image data and the customer-specific data in order to arrange print orders which can be processed by photo finishing printers 22, 24, 26.

In the embodiment according to Fig. 2, the mobile station 10 is configured by the provider of the mobile network. At the least, the mobile station 10 should be able to work with MMS data fields. Due to the latency characteristics, GRPS is preferred over GSM. In an advantageous case, the mobile station includes a digital camera to capture pictures and to record the digital image data. The MMS-enabled mobile station should be able to cope with the following requirements: composing a picture captured by a customer to represent an MMS data field; supplementing the data with print order information; selecting a shipping or delivery mode, e.g. that the completed order is sent to the home address, picked up at a particular photoshop, or sent to another home address, or the like. A program for dealing with MMS messages used in the mobile station 10 can be e.g. from Ericsson or Panasonic or any other manufacturer for mobile phones 10. It forwards MMS messages from the mobile station 10 to the photo service server station 20a as an ordinary e-mail. It is possible to add further information, for instance private header text, customer identification, the MSISDN of the mobile terminal, print order information (e.g. the number of print copies) and a session ID.

The photo service server station 20a deals with buffering and handling incoming messages, generating and delivering of print orders to the printing infrastructure, which in this embodiment consists of the digital printers 22, 24 and 26, and with generating and delivering of billing information to the mobile network provider server 12, and furthermore with notifying the mobile station. The letter task concerns for instance information regarding the print success for the print order, shipping information, pick-up information and the like.

For instance at the digital printer 22, the customer is able to type in an access code to watch the images of his order on a screen. Then, the customer can order print-outs in accordance with his instantaneous wishes. The customer can chose different photo formats, post card formats, photo CDs or what ever at the digital printer or recording device 22.

The transaction database 20c stores all the relevant data about each transaction, in particular including the customer data, usage data, billing data, shipping data, advertising data, and the like.

The print orders are sent to a printing device HotFolder 20d of the printers. This device 20d can be reached directly from the photo service server station 20a. There has to be a device or software tool to confirm that a print order has been accomplished.

An order management server 20b acts as an intermediate element between the server 20a and the printing infrastructure. The order management server 20b is able to watch and supervise the print orders and to distribute the print orders to an appropriate printer of the printers 22, 24, 26. Of course, other solutions would be supported in the same manner, if for example the FotoWire software tool were applied. The above reference interface 16 is run between the station 12 and the photo service server station 20a. It is possible that the photo service server station 20a uses the SMTP protocol. Conveyed stations 12 might also otherwise use HTTP. The MMS message received by the station 12 can be an ordinary e-mail using the MIME multipart format as defined in RFC 2046. The media type of a single MMS element can be identified by its appropriate MIME type, whereas the media format is indicated by its appropriate MIME sub-type. The first supported media types can be "image/JPG" and "image/GIF" for the picture and for instance "text/plain text" for the reading text. The private content types can be in the form of "application/X-sub-type" and used to transmit additional information.

In the following, a table is set forth showing some definitions of the private MIME subtypes.

| Subtype tag | Format | Content |
|---|---|---|
| x-session ID | number | Unique ID to identify the order |
| x-date | DD:MM:YYY Y | Date of MMS creation |
| x-time | HH:MM:SS | Time of MMS creation |
| x-origMSISDN | Number | Originator of MMS |
| x-notifyMSISDN | Number | MSISDN of where to send the order confirmation by SMS (default is same as x-origMSISDN) |
| x-locLatitude | Number | Latitude in swiss coordinates of position information |
| x-locLongitude | Number | Longitude in swiss coordinates of position information |
| x-locZip | Number | Position information as postal code |
| x-locRadius | Number | Uncertainty radius of positioning information in meters |
| x-shipToFirstName | String | First name of shipping address |
| x-shipToLastName | String | Last name of shipping address |
| x-shipToStreet1 | String | Street (first line) of shipping address |
| x-shipToStreet2 | String | Street (second line) of shipping address |
| x-shipToZip | Number | Postal Code of shipping address |
| x-shipToCity | String | City of shipping address |
| x-shipMethod | Number | 0 = mail to shipping address 1 = pick-up at predefined photoshop (2 = pick-up at nearest photoshop 3 = pick-up at any photoshop) |
| x-BillingMethod | Number | 0 = on monthly mobile bill 1 = pay when pick up (2 = deduct from prepaid) |

Furthermore, interfaces 18a, 18d are provided in the data channels 17a, 17d, which are between the photo service server station 20a and the printing infrastructure 22, 24, 26. According to one option, it is possible to use the ftp protocol to send data files from the station 20a to the printers HotFolder 20d as well as to the order management server 20b. The data files sent to the printer's HotFolder 20d can consist of 1 to m image files and an order definition file. The order definition file can be XML-based.

The particular print order related to a particular customer can be identified by a code which has been generated on the basis of the MSISDN and which code has been transmitted to the customer, e.g. via e-mail.

The MSISDN of a customer can be used to identify the sender of the MMS message. The MMS server 12 should have a means of assigning the MMS-files and related files to addresses of assigned customers on the basis of the MSISDN of the corresponding customers. The respective addresses of the customers should be transmitted to the photo service server station 20a to be assigned to a corresponding customer order, i.e. to the corresponding processed photographs or print-outs. The customer should be able to add an alternative shipping address in case the photographs ordered by the customer are to be sent to somebody else and not to the customer himself.

Furthermore, if the customer has to be identified by his MSISDN, it can be necessary to send an e-mail to the customer to entitle the mobile network provider to transfer the home address of the customer represented by the MSISDN to the photofinisher.

## Claims

1. A method for generating a print-out or a photograph on the basis of image data transferred by a mobile station (10), for instance a mobile phone, a cellular phone or the like, comprising the steps of:
a) an image recording unit of the mobile station (10) captures an image which is digitalised and stored in a memory unit of the mobile station;
b) the image data are sent to an image data processing station (20; 20a, 20b, 22, 24, 26);
c) in the image data processing station, the image data are processed to produce a print-out of the processed image data.

2. The method according to claim 1, further comprising the step of transmitting the digital image data to a mobile network provider station (12) to be sent to the image data processing station (20; 20a, 20b, 22, 24, 26).

3. The method according to claim 2, wherein the mobile network provider station additionally transfers data with respect to the identity of the owner or customer of the transferring mobile station (10), in order to be able to assign the photographs or print-outs to the owner or customer.

4. The method according to anyone of claims 1 or 3, wherein the image processing station sends data to the mobile station, e.g. to confirm receipt of the order from the owner to print out the received digital image data and/or related text data.

5. The method according to anyone of claims 1 to 4, wherein the image processing station processes the received image data in order to enhance the image quality of the data and/or the print-outs or photographs.

6. The method according to anyone of claims 1 to 5, wherein the processed image data are transferred to a digital image printer for printing digital image data.

7. The method according to anyone of claims 1 to 6, wherein the image processing station and/or the image printer generate response data to be sent to the mobile station, e.g. order receipt confirmation information, pricing information, shipping information or the like.

8. The method according to anyone of claims 1 to 7, wherein halftone and/or information data and/or templates to be combined with the image data is added, in particular in order to be printed out on the print-out.

9. The method according to anyone of claims 1 to 8, wherein a photo service server station (20a, 20c, 20b, 20d) receives digital data including digital image data from the mobile station via the mobile provider network (12) as multimedia data and transforms the multimedia data into print order data to be processed by the image data processing station.

10. A system for generating a print-out on the basis of image data transferred by a mobile station, in particular for realising the method according to anyone of claims 1 to 9, comprising:
a) a mobile station (10) having
a1) an image recording unit and
a2) an image data memory for storing the data of captured images;
b) a mobile network provider station which receives digital data including image data from the mobile station, and which provides a connection to a photo service server station;
c) the photo service server station receiving multimedia data from the mobile station via the mobile network provider station and transforming the multimedia data into print order data; and
d) the print order data being transmitted to and processed by a digital printer device (22, 24, 26).
